Europäisches Patentamt

European Patent Office

Office européen des brevets

(19)

(11) Veröffentlichungsnummer: **0 264 574**
**B1**

(12)

# EUROPÄISCHE PATENTSCHRIFT

(45) Veröffentlichungstag der Patentschrift:
09.05.90

(21) Anmeldenummer: 87112140.6

(22) Anmeldetag: 21.08.87

(51) Int. Cl.⁵: **F15B 1/02**, B60T 17/02

(54) Druckquelle, insbesondere für eine hydraulische Bremsanlage.

(30) Priorität: 15.10.86 DE 3635055

(43) Veröffentlichungstag der Anmeldung:
27.04.88 Patentblatt 88/17

(45) Bekanntmachung des Hinweises auf die Patenterteilung:
09.05.90 Patentblatt 90/19

(84) Benannte Vertragsstaaten:
DE FR GB IT

(56) Entgegenhaltungen:
DE-A- 2 009 526
DE-A- 3 541 833
DE-C- 724 070
FR-A- 2 121 951
FR-A- 2 134 126
GB-A- 820 897
GB-A- 2 096 703

(73) Patentinhaber: ALFRED TEVES GMBH,
Guerickestrasse 7, D-6000 Frankfurt/Main 90(DE)

(72) Erfinder: Burgdorf, Jochen, Neugasse 11,
D-6050 Offenbach-Rumpenheim(DE)
Erfinder: Storch, Helmut, Im Mühlfeld 45,
D-6360 Friedberg(DE)
Erfinder: Zingel, Heinz, Olympiastrasse 11,
D-6250 Limburg(DE)
Erfinder: Bartsch, Thomas, Hölderlinstrasse 15a,
D-6233 Kelkheim(DE)

(74) Vertreter: Grau, Ulf, c/o ALFRED TEVES GMBH
Guerickestrasse 7, D-6000 Frankfurt (M) 90(DE)

## Beschreibung

Die Erfindung bezieht sich auf eine Druckquelle, insbesondere für eine hydraulische Bremsanlage, bestehend aus enem Speicher, einer Pumpe und einem Druckschalter, der den Pumpenantrieb bei Erreichen des Solldrucks im Speicher abschaltet, wobei vom Pumpenförderstrom eine Entlastungsleitung abzweigt, in die eine Sicherheitseinrichtung eingeschaltet ist.

Eine derartige Druckquelle ist in der nicht vorveröffentlichten DE-A 3 541 833 (OT 4.6.87 der A. Teves GmbH beschrieben.

Damit bei einer Funktionsunfähigkeit des Druckschalters der Speicher und die angeschlossenen Verbraucher nicht mit zu großen Drücken versorgt werden, ist bei der bekannten Einrichtung als Sicherheitseinrichtung ein Überdruckventil vorgesehen, das den Druck auf ein bestimmtes Niveau begrenzt.

Bei dieser Anlage arbeitet die Pumpe bei Funktionsunfähigkeit des Druckschalters ständig gegen einen sehr hohen Druck, so daß eine Überhitzung der Pumpe und des Pumpenantriebs nicht ausgeschlossen werden kann. Es ist daher ein Überhitzungsschalter vorzusehen, der den Pumpenantrieb bei Überhitzung ausschaltet. Das Abschalten der Pumpe bzw. ihre Zerstörung, wenn kein Überhitzungsschalter vorgesehen ist, hat zur Folge, daß nach Druckentleerung des Speichers kein Druckmittel unter Druck mehr zur Verfügung gestellt werden kann.

Aus der DE-A 2 009 526 ist weiterhin eine Berstscheibensicherheitseinrichtung für einen Druckbehälter bekannt geworden.

Eine derartige Einrichtung kann aber insbesondere bei der Druckquelle für die Bremsanlage eines Kraftfahrzeuges nicht eingesetzt werden, da, für den Fall, daß die Berstscheibensicherheitseinrichtung aktiviert wird, kein Druck mehr im Speicher aufgebaut werden kann, und je nach Art der Bremsanlage eine Abbremsung des Fahrzeugs unmöglich wird.

Die Erfindung geht daher von der Aufgabe aus, eine Druckquelle zu schaffen, die bei Funktionsunfähigkeit des Druckschalters so arbeitet, daß im Speicher weder ein zu hoher Druck aufgebaut wird, noch die Druckversorgung vollständig zusammenfällt. Gleichzeitig soll eine Überhitzung der Pumpe und des Pumpenantriebs vermieden werden.

Die Aufgabe wird dadurch gelöst, daß die Sicherheitseinrichtung eine Berstscheibe und eine der Berstscheibe nachgeschaltete Druckmindereinrichtung aufweist.

Die Betriebssicherheit der Druckquelle wird sichergestellt, indem zwischen die Pumpe und den Speicher ein Rückschlagventil geschaltet wird, das zum Speicher hin öffnet.

Die Druckminderenheit kann in verschiedener Weise realisiert werden. Zum einen kann eine Drossel vorgesehen werden. Diese Drossel ist einfach und billig herzustellen. Das Druckgefälle hängt allerdings vom Druckmittelstrom ab.

Eine weitere Möglichkeit besteht darin, die Druckmindereinheit durch ein Druckdifferenzventil darzustellen, wobei z.B. ein federkraftbeaufschagtes Rückschlagventil zum Einsatz kommen kann.

Eine günstige Anordnung der Elemente erhält man, wenn die Sicherheitseinrichtung in eine Leitung zwischen dem Pumpenausgang und einem drucklosen Ausgleichsbehälter geschaltet ist.

Die Auslegung der Drossel bzw. des Druckdifferenzventils wird in günstiger Weise mit der Dauerbelastungsfähigkeit der Pumpe und des Pumpenantriebs verknüpft. Dies wird dadurch erreicht, daß die Bauelemente der Druckmindereinrichtung, die den Staudruck vor der Druckmindereinrichtung bestimmen, so ausgebildet sind, daß bei einem defekten Druckschalter und gebrochener Berstscheibe die Pumpe ständig, ohne Überhitzung, gegen den Staudruck arbeitet.

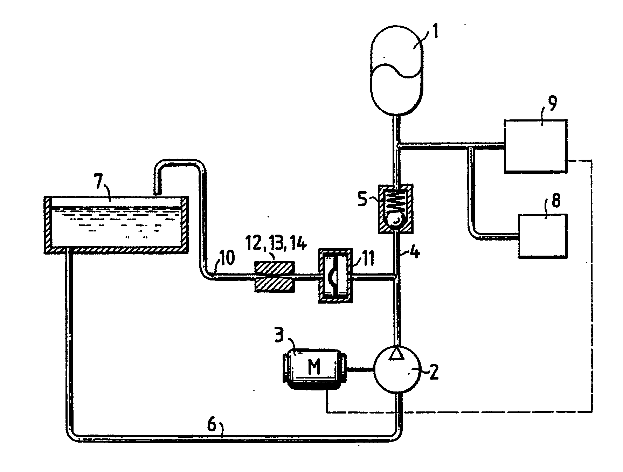

In der Figur ist schematisch ein Ausführungsbeispiel der Erfindung dargestellt. Der Speicher 1 wird über die Druckmittelleitung 4 und dem Rückschlagventil 5 von der Pumpe 2, die von dem Elektromotor 3 angetrieben wird, mit Druckmittel unter Druck versorgt.

Der Pumpeneingang ist über eine Druckmittelleitung 6 an einen drucklosen Ausgleichsbehälter 7 angeschlossen.

Der Druck im Speicher 1 wird an einen Verbraucher 8, das ist insbesondere die Bremsanlage von einem Fahrzeug, weitergeleitet.

Mit dem Druckschalter 9 erfolgt eine Regelung des Drucks im Speicher 1. Wird ein bestimmter Solldruck erreicht, so schaltet der Druckschalter 9 den Antriebsmotor 3 der Pumpe 2 aus, so daß keine weitere Druckerhöhung erfolgen kann.

Von der Druckleitung 4 zweigt eine Druckleitung 10 zum drucklosen Ausgleichsbehälter 7 ab. In diese Druckleitung ist zunächst eine Berstscheibe 11 geschaltet und dann eine Drossel 13 bzw. ein Druckdifferenzventil 14.

Im Normalfall arbeitet die Druckquelle in der schon beschriebenen Art. Die Pumpe 2 wird so lange angetrieben, bis sich im Speicher 1 der Solldruck aufgebaut hat und mt Hilfe des Druckschalters 9 der Pumpenantrieb 3 ausgeschaltet wird.

Sollte diese Schaltung versagen, so wird der Pumpenantrieb 3 nicht ausgeschaltet, und es wird im Speicher ein Druck aufgebaut, der über dem Solldruck liegt. Dieser Druck steht nicht nur im Speicher 1, sondern auch vor der Berstscheibe 11 an.

Sobald der Berstdruck erreicht ist, also der Druck, bei dem die Scheibe aufgrund ihrer Konstruktion bricht, ist der Pumpenausgang an den drucklosen Ausgleichsbehälter 7 angeschlossen. Damit kein vollständiger Druckabfall erfolgt, ist in die Leitung 10 eine Drossel 13 bzw. ein Druckdifferenzventil 14 geschaltet, so daß am Pumpenausgang ein geringer Restdruck verbleibt. Dieser kann z.B. bei 40 bar liegen, wenn der Normaldruck im Speicher bei ca. 180 bar liegt.

Da der Druckschalter 9 weiterhin funktionsunfähig ist, wird die Pumpe gegen dieses Druckmittel zum Verbraucher 8 in den Speicher 1 und in den Ausgleichsbehälter 7 pumpen. Die dabei umgesetzte Energie ist aber nicht so groß, daß dies zu einer Überhitzung von Pumpe und Pumpenantrieb führt.

Gleichzeitig wird dem Verbraucher aber ein Druck zur Verfügung gestellt, der eine Notbetätigung des Verbrauchers möglich macht.

Bezugszeichenliste

1 Speicher
2 Pumpe
3 Pumpenantrieb
4 Druckleitung
5 Rückschlagventil
6 Druckleitung
7 Ausgleichsbehälter
8 Verbraucher
9 Druckschalter
10 Druckleitung
11 Berstscheibe
12 Druckmindereinrichtung
13 Drossel
14 Druckreduzierventil

**Patentansprüche**

1. Druckquelle, insbesondere für eine hydraulische Bremsanlage, bestehend aus einem Speicher (1), einer Pumpe (2) und einem Druckschalter (9), der den Pumpenantrieb, bei Erreichen des Solldrucks im Speicher (1) abschaltet, wobei vom Pumpenförderstrom eine Entlastungsleitung (10) abzweigt, in die eine Sicherheitseinrichtung eingeschaltet ist, die eine Berstscheibe (11) und eine der Berstscheibe nachgeschaltete Druckmindereinrichtung (12) aufweist.

2. Druckquelle nach Anspruch 1, dadurch gekennzeichnet, daß zwischen Pumpe (2) und Speicher (1) ein Rückschlagventil (5) eingeschaltet ist, das zum Speicher (1) hin öffnet.

3. Druckquelle nach Anspruch 1, dadurch gekennzeichnet, daß die Druckmindereinrichtung (12) von einer Drossel (13) gebildet ist.

4. Druckquelle nach Anspruch 1, dadurch gekennzeichnet, daß die Druckmindereinrichtung (12) von einem Druckdifferenzventil (14) gebildet ist.

5. Druckquelle nach Anspruch 1, dadurch gekennzeichnet, daß die Sicherheitseinrichtung in die Leitung (10) zwischen den Ausgang der Pumpe (2) und den drucklosen Ausgleichsbehälter (7) geschaltet ist.

6. Druckquelle nach Anspruch 1, 3 oder 4, dadurch gekennzechnet, daß die Bauelemente der Druckmindereinrichtung (12), die den Staudruck vor der Druckmindereinrichtung (12) bestimmen, so ausgebildet sind, daß bei einem defekten Druckschalter (9) und gebrochener Berstscheibe (11) die Pumpe ständig, ohne Überhitzung, gegen den Staudruck arbeitet.

**Claims**

1. A pressure source, in particular for brake system, composed of an accumulator (1), a pump (2) and a pressure switch (9) which disconnects the pump drive upon attainment of the desired pressure in the accumulator (1), wherein a relief line (10) in which a safety device is inserted branches off from the pump supply conduit, the said safety device comprising a rupture disc (11) and a pressure-reducing means (12) inserted after the rupture disc.

2. A pressure source as claimed in claim 1, characterized in that a non-return valve (5) opening towards the accumulator (1) is connected between pump (2) and accumulator (1).

3. A pressure source as claimed in claim 1, characterized in that the pressure-reducing means (12) is formed of a throttle (13).

4. A pressure source as claimed in claim 1, characterized in that the pressure-reducing means (12) is formed of a pressure-difference valve (14).

5. A pressure source as claimed in claim 1, characterized in that the safety device is inserted into the line (10) between the outlet of the pump (2) and the unpressurized supply reservoir (7).

6. A pressure source as claimed in claim 1, 3 or 4, characterized in that the construction elements of the pressure-reducing means (12) which determine the stowed pressure in front of the pressure-reducing means (12) are designed such that, in the event of a defective pressure switch (9) and a broken rupture disc (11), the pump is operating constantly against the dynamic pressure, without becoming overheated.

**Revendications**

1. Source de pression, en particulier pour un système hydraulique de freinage, comprenant un accumulateur (1), une pompe (2) et un interrupteur sensible à la pression (9), qui coupe l'entraînement de la pompe lorsque la pression de consigne est atteinte dans l'accumulateur (1), caractérisé en ce que, du courant de refoulement de la pompe, part une conduite de décharge (10) sur laquelle est implanté un dispositif de sécurité qui comporte un disque de rupture (11) et un dispositif de réduction de pression (12) disposé en aval du disque de rupture.

2. Source de pression conforme à la revendication 1, caractérisée en ce que, entre la pompe (2) et l'accumulateur (1) est implantée une valve antiretour (5) qui s'ouvre en direction de l'accumulateur (1).

3. Source de pression conforme à la revendication 1, caractérisée en ce que le dispositif de réduction de pression (12) est formé par un étranglement (13).

4. Source de pression conforme à la revendication 1, caractérisée en ce que le dispositif de réduction de pression (12) est formé d'une valve à différence de pression (14).

5. Source de pression conforme à la revendication 1, caractérisée en ce que le dispositif de sécurité est implanté sur la conduite (10) entre la sortie de la pompe (2) et le réservoir de compensation sans pression (7).

6. Source de pression conforme à la revendication 1, 3 ou 4, caractérisée en ce que les éléments constitutifs du dispositif de réduction de pression (12), qui déterminent la pression dynamique devant le dispositif de réduction de pression (12), sont conçus de façon qu'en cas de défaillance de l'interrupteur sensible à la pression (9) et de rupture du disque de rupture (11), la pompe travaille en permanence, sans surchauffe, à l'encontre de la pression dynamique.